# EUROPEAN PATENT SPECIFICATION

(11) **EP 4 123 067 B1**
(45) Date of publication and mention of the grant of the patent: **10.09.2025**
(21) Application number: 22186292.3
(22) Date of filing: 21.07.2022
(51) Int. Cl.: D01F 11/16, D01F 9/145, D01F 9/16, D01F 9/22, F17C 1/14, F17C 1/16

(54) **METHOD FOR MANUFACTURING CARBON FIBER**
VERFAHREN ZUR HERSTELLUNG EINER KOHLEFASER
PROCÉDÉ DE FABRICATION DE FIBRE DE CARBONE

(30) Priority: 22.07.2021 TW 110126919
(43) Date of publication of application: 25.01.2023
(73) Proprietor: Formosa Plastics Corporation, Kaohsiung City (TW)
(72) Inventor: HWANG, Long-Tyan, Kaohsiung City (TW); HSIEH, Cheng-Chiang, Mailiao Township, Yunlin County (TW); YU, Ming-Chang, Kaohsiung City (TW); CHOU, Cheng-Chun, Kaohsiung City (TW)
(74) Representative: Lang, Christian

(56) References cited:
- CN-A- 110 409 018
- CN-A- 111 074 381
- US-A- 5 462 799
- US-A1- 2006 163 261
- US-A1- 2019 040 549
- US-A1- 2020 240 047
- US-A1- 2021 115 597
- US-B1- 6 190 481
- US-B2- 8 129 017

## Description

### BACKGROUND

### Field of Invention

The present disclosure relates to a manufacturing method of carbon fiber, in particular to the carbon fiber for producing a carbon fiber composite bottle.

### Description of Related Art

Carbon fiber is a kind of high-performance fiber reinforcement material, which has the properties of high strength, high modulus, high temperature resistance, wear resistance, corrosion resistance, electrical conductivity, and thermal conductivity, and has the characteristics of soft process ability of fiber and high tensile strength of carbon material. In recent years, with the improvement of production technology and the expansion of production scale, carbon fiber has been widely used in new textile machinery, carbon fiber composite core cables, wind power blades, carbon fiber composite bottles, oil field drilling, medical equipments, automobile components, building reinforcing materials, sporting goods, and other fields No matter in the traditional aerospace field, or in new markets such as automobile components and wind turbine blades, the application range of carbon fiber is gradually expanding.

Document US 2019/040549 A1 relates to a carbon fiber bundle that develops high mechanical performance, for example, and discloses a method for manufacturing a carbon fiber according to the preamble of claim 1. US 2020/240047 discloses a method for producing a unidirectional carbon fiber tape, the method comprising passing a first portion of a strand of fibers through an oven to carbonize the first portion, thereby converting carbon fiber precursor fibers of the first portion to carbon fibers, wherein the first portion comprises carbon fiber precursor fibers; and impregnating the carbon fibers of the first portion with thermoplastic matrix material to form impregnated fibers, while a second portion of the strand of fibers that is upstream of the first portion is passing through the oven to convert carbon fiber precursor fibers of the second portion to additional carbon fibers. The carbon fiber is obtained by electrolytic treatment. The conductivity of the eletrolytic solution is at most 40 mS/cm (lower than 200 mS/cm.

In order to pursue high performance in a composite material of carbon fiber and resin, and give play to the superior mechanical properties of carbon fiber itself, such as strength and elastic modulus, as well as the adhesion with resin, improving the surface properties of carbon fiber is an essential and important process for carbon fiber production.

### SUMMARY

The objectives of the disclosure are to produce carbon fibers with excellent mechanical properties and improved interface properties with base resin, and to provide an electrochemical oxidation method, namely a surface treatment method, which can obtain the properties.

Some embodiments of the present disclosure provide a method for manufacturing carbon fiber, and the method includes: placing carbon fiber as an anode in an electrolyte, wherein the electrolyte is nitric acid, sulfuric acid, phosphoric acid, acetic acid, ammonium bicarbonate, sodium hydroxide, or potassium nitrate; and performing a surface treatment, wherein a surface of the carbon fiber is oxidized by active oxygen generated by anodic electrolysis, and thereby oxygen-containing functional groups are introduced to the surface. In the method for manufacturing the carbon fiber, a conductivity value of the electrolyte is between 200 and 3,000 ms/cm

In some embodiments, in the method for manufacturing carbon fiber, the carbon fiber is rayon base fiber, asphalt base fiber, or polyacrylonitrile fiber.

In some embodiments, in the method for manufacturing carbon fiber, the temperature of the electrolyte is controlled at 15-40°C.

In some embodiments, in the method for manufacturing carbon fiber, the surface treatment includes controlling the voltage at 5-40 V.

In some embodiments, in the method for manufacturing carbon fiber, the electricity amount supplied in the surface treatment is 3-40 coulombs/gram.

In some embodiments, in the method for manufacturing carbon fiber, the time for the surface treatment is 5-90 seconds.

In some embodiments, in the method for manufacturing carbon fiber, the electrolyte is sulfuric acid, ammonium bicarbonate, or phosphoric acid, the conductivity value of the electrolyte is 250-700 ms/cm, and the electricity amount supplied in the surface treatment is 15-25 coulombs/gram.

Further disclosed herein is a carbon fiber composite bottle, which includes a bottle body and carbon fibers. The bottle body is a Type III bottle or a Type IV bottle. The carbon fiber covers the bottle body, the surface oxygen concentration of the carbon fiber is 5-35%, and the surface roughness of the carbon fiber is 5-25 nm.

In the carbon fiber composite bottle, the tensile strength of the carbon fiber may be greater than 5,100 MPa.

### BRIEF DESCRIPTION OF THE DRAWINGS

The invention can be more fully understood by reading the following detailed description of the embodiment, with reference made to the accompanying drawings as follows:
Fig. 1 illustrates a flowchart of a method for manufacturing carbon fiber according to some embodiments of the present disclosure.
Fig. 2 shows a schematic diagram of an electrolysis apparatus according to some embodiments of the present disclosure.
Fig. 3 illustrates the surface roughness of the carbon fiber according to some embodiments of the present disclosure.
Fig. 4 illustrates a flowchart of a method for manufacturing a carbon fiber composite bottle.
Fig. 5A illustrates a type III bottle of the carbon fiber composite bottle.
Fig. 5B illustrates a type IV bottle of the carbon fiber composite bottle.

### DETAILED DESCRIPTION

When a material contains more than 90% of carbon fiber, due to the low activity of the carbon fiber surface itself, if the material is directly applied as an intermediate product or a composite material for a processing process without special treatment, the performance of the product is insufficient. Generally, after carbon fiber is carbonized at high temperature, the carbon fiber usually undergoes a surface treatment procedure to improve the surface reactivity of the carbon fiber. The disclosure provides a carbon fiber having an activated surface and the carbon fiber can be used to produce carbon fiber composite bottles, such as type III bottles or type IV bottles.

Carbonized fiber has a strong chemical inertness because its surface is basically composed of carbon atoms. However, the carbon fiber needs to be compounded with resin and other base materials, and surface of the carbon fiber is desired to have appropriate activity. Therefore, the number of oxygen-containing active functional groups on the carbon fiber surface should be increased through a surface oxidation treatment. There are several oxidation methods, and electrochemical oxidation is mainly used in industry. Electrochemical oxidation treatment takes advantage of the conductivity of carbon fiber. Carbon fiber is placed in an electrolyte solution as an anode, and active oxygen generated by an anodic electrolysis oxidizes the surface of the carbon fiber, thus oxygen-containing functional groups are introduced to improve the interface bonding performance of the composite materials having carbon fiber.

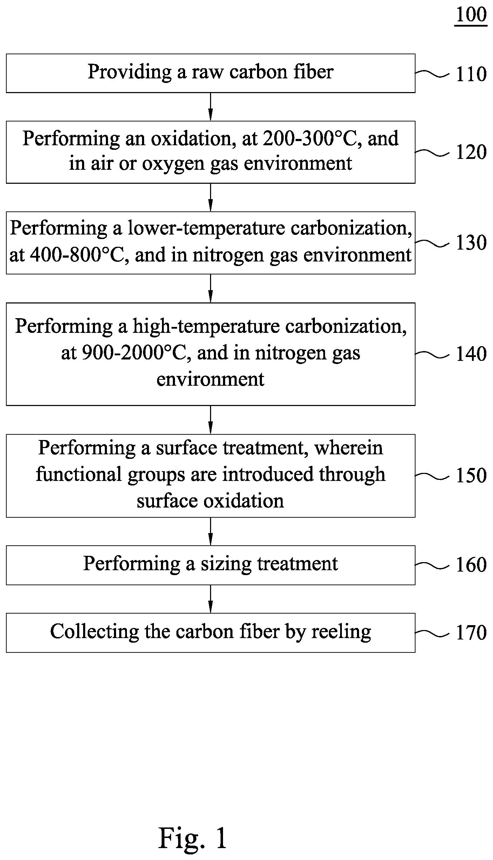

Fig. 1 illustrates a flowchart of a method for manufacturing carbon fiber according to some embodiments. First, in step 110 of the method 100 for manufacturing carbon fiber, a raw carbon fiber (which is also called carbon fiber precursor) is provided.

In some embodiments, the carbon fiber is rayon base fiber, asphalt base fiber, or polyacrylonitrile fiber, especially polyacrylonitrile fiber is most suitable for producing carbon fiber precursor. In some embodiments, the carbon fiber precursor is polyacrylonitrile fiber, and the production process for polyacrylonitrile fiber produces high performance raw carbon fiber made from wet spinning and dry jet spinning.

In some embodiments, it is preferable to control the adhesion amount of an oil agent on the raw carbon fiber in the range of 0.5-3.0% by weight, and in the range of 0.8-2.0% by weight is most suitable. If the adhesion amount of the oil agent is less than 0.5% by weight, the carbon fiber itself is too loose, and the operability of the carbon fiber firing process decreases. If the adhesion amount of the oil agent is higher than 3.0% by weight, the oil agent will easily produce chemical cross-linking reaction in the oxidation stage of the carbon fiber firing process, which will cause local defects in the high-temperature carbonization stage, resulting in hairiness in the finished carbon fiber products.

Next, step 120 of the method 100 for manufacturing carbon fiber is an oxidation stage of the carbon fiber firing process, and the oxidation stage is carried out at 200-300°C in air or oxygen environment. In some embodiments, when the production cost is a main consideration, air is used.

In some embodiments, in the oxidation stage, the oxidation density is preferably controlled at 1.30-1.42 g/cm³, and 1.33-1.39 g/cm³ is the most suitable range.

After the carbon fiber passes through the oxidation stage, in step 130 of the method 100 for manufacturing carbon fiber, the carbon fiber is carbonized at 400-800°C through a lower-temperature carbonization stage, and the reaction environment is filled with inert gas. In some embodiments, when the production cost is a main consideration, nitrogen gas is used. In some embodiments, when the compactness and the defect reduction of the carbon fiber are considered, the heating rate of the low-temperature carbonization is preferably below 600°C/min, and the most suitable range is controlled below 400°C/min, which can avoid an excessive carbonization reaction leading the performance degradation of the carbon fiber.

In some embodiments, in the low-temperature carbonization stage, the carbonization density is preferably controlled at 1.50-1.62 g/cm³, and 1.53-159 g/cm³ is the most suitable range.

Next, step 140 of the method 100 for manufacturing carbon fiber is a high-temperature carbonization stage. In some embodiments, when the production cost is a main consideration in the high-temperature carbonization, nitrogen gas is used. In some embodiments, the temperature range of the high-temperature carbonization stage is 900-2,000°C. From the viewpoint of the performance of carbon fiber, the maximum temperature of carbonization is preferably higher than 1,200°C, and it is most suitable to control the temperature in the range of 1,300~1,400°C.

In some embodiments, when the compactness and the defect reduction of the carbon fiber are considered, the heating rate of the high-temperature carbonization is preferably below 600°C/ min, and the most suitable range is controlled below 400°C/ min, which can avoid an excessive reaction in carbonization stage, and the resulting carbon fiber will have high performance.

Next, in step 150 of the method 100 for manufacturing carbon fiber, a surface treatment is performed to introduce functional groups through surface oxidation. The steps of the surface treatment are described in detail below.

After the surface treatment, in step 160 of the method 100 for manufacturing carbon fiber, the carbon fiber passes through a sizing agent immersion tank (i.e., a sizing treatment) and then a drying oven. Then, in step 170 of the method 100 for manufacturing carbon fiber, the finished carbon fiber is collected by reeling.

In some embodiments, in order to satisfy that compatibility of a composite resin in a downstream process, epoxy resin is mainly used for the sizing agent, and the adhesion amount of the sizing agent is preferably controlled in the range of 0.5-3.0%, and 0.8-2.0% is most suitable. If the adhesion amount of the sizing agent is less than 0.5%, the carbon fiber itself is too loose, and the downstream composite material is easy to produce hairiness. If the adhesion amount of the sizing agent is higher than 3.0%, the bundle property of the carbon fiber will become better, but the fiber opening property will become worse in the downstream processing of the composite material.

The surface treatment of step 150 of the method 10 for manufacturing carbon fiber is described in detail below. The degree of surface oxidation of carbon fiber can be controlled by changing the reaction temperature, the electrolyte concentration, the treatment time, and the electricity amount of the reaction.

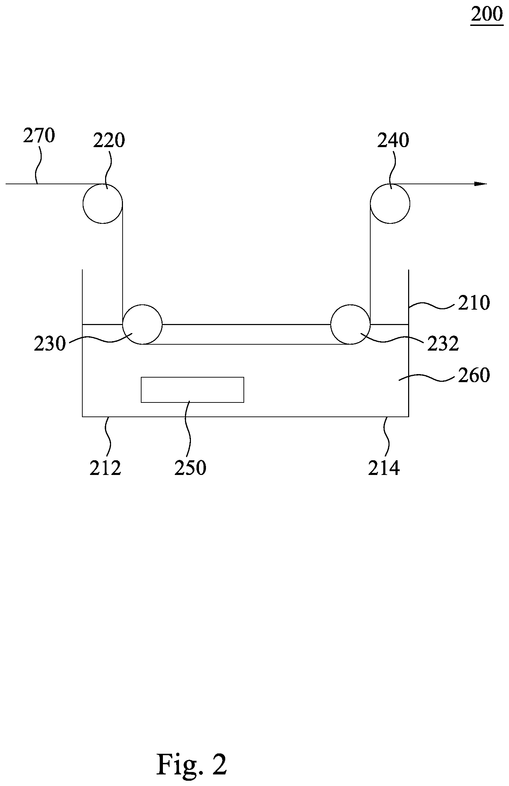

Fig. 2 illustrates a surface treatment apparatus for a surface treatment of the carbon fiber according to some embodiments. A surface treatment apparatus 200 is a single-stage surface treatment apparatus. The surface treatment apparatus 200 includes a treatment tank 210, an anode roller 220 above a first side 212 of the treatment tank 210, a first immersion roller 230 near the first side 212 in the treatment tank 210, a second immersion roller 232 near a second side 214 in the treatment tank 210, a guide roller 240 above the second side 214 of the treatment tank 210, and a cathode plate 250 in the treatment tank 210. The electrolyte 260 is in the treatment tank 210, wherein the electrolyte 260 partially submerges the first immersion roller 230 and the second immersion roller 232, and the electrolyte 260 completely submerges the cathode plate 250.

As shown in Fig. 2, the carbon fiber 270 is placed above the first side 212 of the treatment tank 210, enters the treatment tank 210 through the anode roller 220, is immersed in the electrolyte 260 through the first immersion roller 230, then leaves the electrolyte 260 through the second immersion roller 232, and then leaves the surface treatment apparatus 200 through the guide roller 240 above the second side 214 of the treatment tank 210.

In some embodiments, the carbon fiber can be treated by single-stage or multi-stage surface treatment apparatus, and the concentration of the functional oxygen groups on the carbon fiber surface can be increased by matching the treatment time and electricity amount.

In some embodiments, the electrolyte used for the surface treatment is nitric acid, sulfuric acid, phosphoric acid, acetic acid, ammonium bicarbonate, sodium hydroxide, potassium nitrate, or the like. It is better to control the electrolyte with the conductivity value of 200-3,000 ms/cm. When the subsequent washing efficiency and the service life of electrolysis apparatus are considered, the most suitable range of the conductivity value is 300-2,500 ms/cm.

In some embodiments, sulfuric acid, phosphoric acid or ammonium bicarbonate is used as an electrolyte for the surface treatment of carbon fiber, the electrolyte has good production operability and can be used to produce carbon fiber with better performance.

The higher the temperature of the electrolyte, the higher the electron conduction efficiency; thus the electrolytic treatment efficiency is improved. In some embodiments, the electrolyte temperature is preferably controlled at 15-40°C, especially at 20-30°C. When the temperature of the electrolyte is higher than 40°C, the water content in the electrolyte is easily evaporated and the electrolyte is concentrated, which makes it difficult to maintain the uniformity of the electrolyte. After the carbon fiber passes through the surface treatment apparatus, the quality of the carbon fiber becomes extremely unstable.

In some embodiments, the voltage for the surface treatment is preferably controlled at 5 ~ 40 V. If the voltage is too high in the production process, it will affect the operation and safety of personnel, so it is best to control the voltage at a lower voltage of 5-20 V.

In some embodiments, the electricity amount supplied to the surface treatment of carbon fiber is preferably in the range of 3-40 coulombs/gram, especially in the range of 10-30 coulombs/gram. If the supplied electricity amount is less than 3 coulombs/gram, the surface oxygen concentration of the carbon fiber is obviously insufficient, which is unfavorable for bonding with the base resin at the interface, and a test result shows that the bursting strength of a composite bottle wrapped with the carbon fiber is low. If the supplied electricity amount is higher than 40 coulomb/gram, the electrolytic intensity is too high, which will easily damage the fiber, resulting in the problems of exposed internal holes and excessive surface roughness of the carbon fiber, and the increase of the surface defects of the carbon fiber will lead to strength reduction of the carbon fiber.

In some embodiments, when the production operability is considered, it is preferable to control the surface treatment time of the carbon fiber for 5-90 seconds, especially for 10-50 seconds. If the treatment time is less than 5 seconds, the surface oxygen content of the fiber carbon is obviously insufficient, which is unfavorable for bonding with the base resin at the interface, and the bursting strength of a composite bottle wrapped with the carbon fiber is low. If the treatment time is more than 90 seconds, the electrolysis efficiency is too high, which will easily damage the carbon fiber, the internal defects of the carbon fiber will be exposed and the surface roughness will be too large, and the strength of the carbon fiber will be reduced due to the increase of the surface defects.

In some embodiments, after the surface treatment, the physical properties of the carbon fiber, the surface functional oxygen concentration of the carbon fiber (i.e., O_{1S}/C_{1S}), and the surface roughness Ra of the carbon fiber are measured.

In some embodiments, according to Japanese JIS R-7608 standard, the tensile strength and the tensile modulus of the carbon fiber are continuously measured for 6 times or more and averaged.

In some embodiments, after the surface treatment, the tensile strength of the carbon fiber is preferably at least greater than 5,100 MPa; the tensile strength over 5,300 MPa is most suitable. The coefficient of variation of the tensile strength should be at least controlled at 5.0% or below.

In some embodiments, the surface functional oxygen concentration of carbon fiber is referred to as O_{1S}/C_{1S} (hereinafter referred to as the surface oxygen concentration), which is measured by an X-ray photoelectron spectrometer, model ESCALAB, 220i XL. The carbon fiber is placed on a tooling table and fixed, and the measurement is performed according to normal operating procedures. The O_{1S} peak area was integrated from the bond energy of 528 eV to 540 eV, and the C_{1S} peak area was integrated from the bond energy of 282 eV to 292 eV. The surface functional oxygen concentration of carbon fiber was determined from the O_{1S}/C_{1S} ratio, which is measured continuously for 6 times or more and averaged.

In some embodiments, after the surface treatment, the surface oxygen concentration of the carbon fiber is preferably controlled at 5-45%; the range of 10-35% is most suitable when the chemical bonding force of the interface with the base resin is considered. If the surface oxygen concentration of the carbon fiber is lower than 5%, it is unfavorable for the carbon fiber to bond with the base resin at the interface, and the bursting strength of the composite bottle wrapped with the carbon fiber is low. If the surface oxygen concentration is higher than 45%, the chemical bonding force between the carbon fiber and the base resin is too strong, which leads to easily produce local stress concentration points, resulting in overall performance degradation.

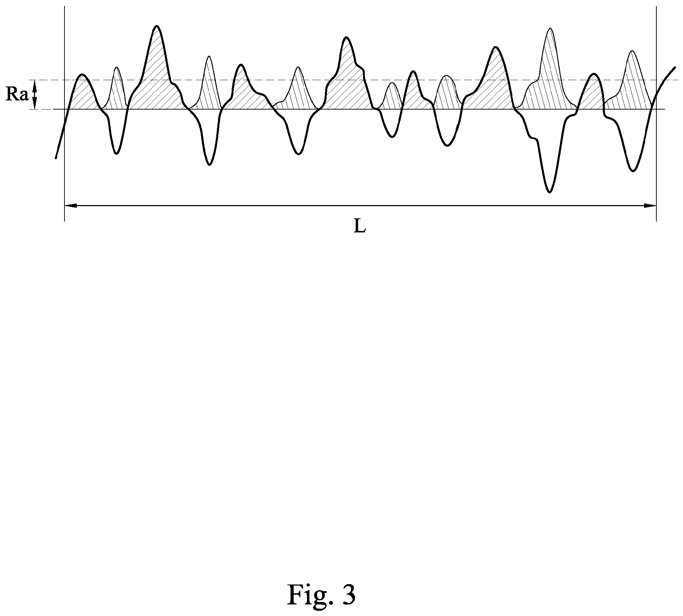

In some embodiments, an atomic force microscope (AFM) is used to observe the surface morphology and to analyze the roughness of the micron-sized carbon fibers. This method adopts Bruker Dimension ICON model to analyze the microstructure and the surface topography of the sample, and the application mode is Tapping mode. Fig. 3 shows the surface of the carbon fiber, and the surface roughness Ra is as shown in Fig. 3. In some embodiments, the surface roughness is defined as the average roughness of the center line within a reference length L, which is measured by the instrument for 6 times or more and averaged.

In some embodiments, after the surface treatment, the surface roughness Ra of the carbon fiber is preferably controlled at 5-35 nm; when the physical bonding force with the base resin at the interface is considered, it is best to control the surface roughness Ra in the range of 7-30 nm, especially in the range of 10-25 nm is best. If the surface roughness of the carbon fiber is less than 5 nm, it is unfavorable to bond with the base resin at the interface, and the bursting strength of the composite bottle wrapped with the carbon fiber is low. If the surface roughness is greater than 35 nm, the physical bonding force between the carbon fiber and the base resin is too strong, but the carbon fiber will be poorly opened when the resin is impregnated in the later stages of the production and processing for the composite material, and the bursting strength variation of the composite bottle wrapped with the carbon fiber will be increased.

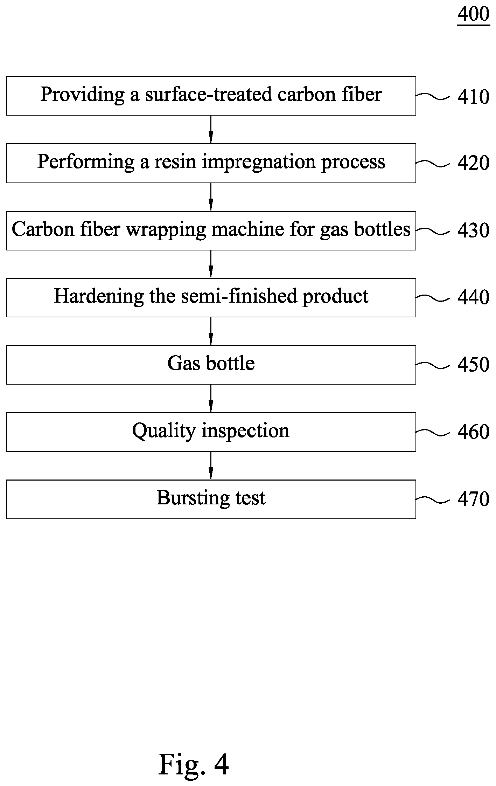

Fig. 4 illustrates a flowchart of a method for making a carbon fiber composite bottle. First, in step 410 of the method 400 for making the carbon fiber composite bottle, the surface-treated carbon fiber is provided.

Next, in step 420, the carbon fiber undergoes a resin impregnation process.

Next, in step 430, the carbon fiber is placed in a carbon fiber wrapping machine for gas bottles to produce a semi-finished gas bottle.

Next, in step 440, the semi-finished product is hardened.

Next, in step 450, a finished carbon fiber composite bottle, such as a gas bottle, is produced.

The resulting carbon fiber composite bottle is then subjected to a quality inspection in step 460 and a bursting test in step 470.

In some illustrative examples, the carbon fiber yarn is dipped in a resin tank and undergoes a wrapping machine to produce a semi-finished gas bottle. After the semi-finished gas bottle is hardened, the finished product is pressurized and repeatedly subjected to bursting tests for 6 times or more, and the average value is obtained.

Generally, there are four types of bottles: type I bottles with no outer coating, type II bottles with an outer coating of glass fiber, type III bottles and type IV bottles with an outer coating of carbon fiber. The classification of these four types of bottles is shown in Table 1 below.

**Table 1**

| Type | Type I bottle | Type II bottle | Type III bottle | Type IV bottle |
|---|---|---|---|---|
| Weight (kg/liter) | 1.35 | 1.05 | 0.43 | 0.35 |
| Use period (year) | 15 | 15 | 30 | 30 |
| Description | Material of the inner tank is steel | Material of the inner tank is steel | Material of the inner tank is aluminum | The material of the inner tank is general purpose plastic |
| | The outer layer is not covered with carbon fiber | The outer layer is coated with glass fiber, and the inner tank is wrapped with the glass fiber only in annular way. | The outer layer is coated with carbon fiber, and the inner tank is wrapped with the carbon fiber in annual way and in spiral way | The outer layer is coated with carbon fiber, and the inner tank is wrapped with the carbon fiber in annual way and in spiral way |

The types of the carbon fiber composite bottle include all type III bottles and type IV bottles, such as: paint bomb bottle for recreation, oxygen bottle for medical use, gas bottle for fire fighting equipment, or fuel bottle for transportation.

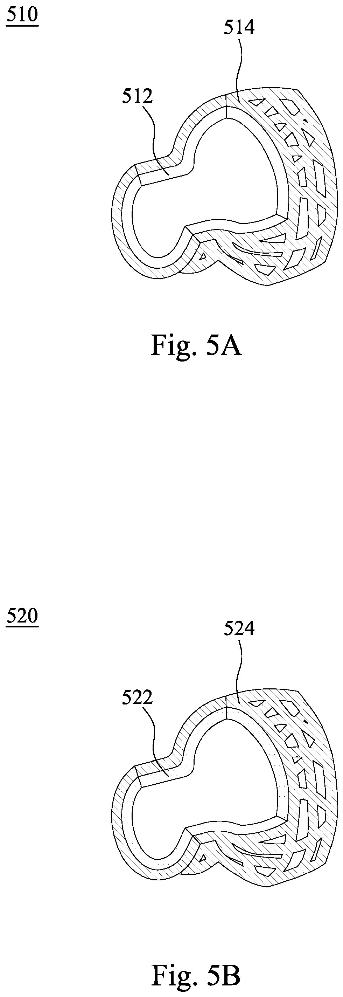

Fig. 5A shows a schematic diagram of a type III bottle. A carbon fiber composite bottle 510 includes a bottle body 512 and carbon fiber 514. The material of the bottle body 512 is aluminum. The carbon fiber 514 is wound around the bottle body 512 in annular way and in spiral way.

Fig. 5B shows a schematic diagram of a type IV bottle. A carbon fiber composite bottle 520 includes a bottle body 522 and carbon fibers 524. The material of the bottle body 522 is high-density polyparaene (HDPE) in one example. The carbon fiber 524 is wound around the bottle body 522 in annular way and in spiral way.

Table 2 below shows the comparisons of the different surface treatment conditions for treating carbon fiber, the operability of the various processes, and the surface oxygen concentrations, the surface roughnesses, the carbon fiber strengths, and the bursting strengths of the carbon fiber composite bottles having the resulting carbon fibers.

**Table 2**

| | Example 1 | Comparati ve example 1 | Comparati ve Example 2 | Example 2 | Comparati ve Example 3 | Comparati ve Example 4 | Comparati ve Example 5 | Example 3 |
|---|---|---|---|---|---|---|---|---|
| Electrolyte | Sulfuric acid | Sulfuric acid | Sulfuric acid | Ammoniu m bicarbonat e | Ammoniu m bicarbonat e | Ammoniu m bicarbonat e | Ammoniu m bicarbonat e | Phosphori c acid |
| Conductivi ty (ms/cm) | 250 | 300 | 500 | 500 | 500 | 700 | 2600 | 700 |
| Electricity amount (coulomb/ gram) | 15 | 50 | 40 | 20 | 5 | 45 | 10 | 25 |
| operability of the process | ○ | ○ | ○ | ○ | ○ | ○ | △ | ○ |
| Surface oxygen concentrat ion | 15 | 40 | 35 | 20 | 10 | 36 | - | 22 |
| Surface roughness (nm) | 18 | 28 | 25 | 16 | 14.5 | 18.5 | - | 19.2 |
| Carbon fiber strength (Mpa) | 5,225 | 4,650 | 5,120 | 5,410 | 5,385 | 5,180 | - | 5,430 |
| Bursting strength of the carbon fiber composite bottle | 1,060 | 852 | 950 | 1,200 | 765 | 800 | - | 1,210 |

Symbols for process operability: ∘ Excellent; △ Unable to operate normally.

In this test, each of the carbon fiber composite bottles has a volume of 2 liters and can be used for a medical gas bottle.

In Examples 1, 2 and 3, sulfuric acid, ammonium bicarbonate, and phosphoric acid were used as the electrolytes for the surface treatments of the carbon fibers. When the carbon fibers passed through the surface treatment apparatus, the conductivities of the apparatus were adjusted to 250-700 ms/cm, the supplied electricity amounts were 15~25 coulombs/g, and the surface functional oxidation concentrations of the carbon fibers were 15-22%, which provided sufficient oxygen concentrations to strengthen the chemical bonding force with base resin. In addition, the measurement values of the surface roughness of the carbon fibers were 16-19.2 nm, the surface defects were small; and the strengths of the carbon fibers were as high as 5,225 MPa or above. The carbon fiber composite bottles were made for blasting test, and the blasting strengths were higher than the design standard of 1,000 bar.

In Comparative Examples 1, 2, and 4, sulfuric acid and ammonium bicarbonate electrolyte were used as electrolytes, the excessive conductivities and the treatment electricity amounts resulted in the excessive concentrations of the surface functional oxygen concentrations and the large roughnesses of the surface of the carbon fibers, which reduced the performances of the carbon fibers.

In Comparative Example 3, ammonium bicarbonate electrolyte was used as an electrolyte, the supplied electricity amount was too low, which resulted in the insufficient concentrations of the surface functional oxygen of the carbon fiber. The carbon fiber composite bottle of the comparative example 3 had low burst strengths, which cannot reach the design standard of 1,000 bars.

In Comparative Example 5, ammonium bicarbonate was used as an electrolyte, the conductivity was as high as 2,600 ms/cm, but this leaded the problem of volatile organic compounds (VOC) in the surrounding environment of surface treatment apparatus. Although an exhaust hood is disposed above the electrolytic tank, the odor still escaped to the outside, and the operability of the process was not good.

The present disclosure provides a method for manufacturing carbon fiber. After the surface treatment and the activation, the resulting carbon fiber can be used to produce carbon fiber composite bottles. The composite bottles have the advantages of light weight, long service life, good corrosion resistance, and no pollution to filling media. The composite bottles can be widely used in type III bottles or type IV bottles, such as paint bomb bottles for leisure and entertainment, oxygen bottles for medical use, gas bottles for fire fighting equipment, or fuel bottles for transportation.

## Claims

1. A method for manufacturing carbon fiber, comprising:
placing a carbon fiber (270) as an anode in an electrolyte (260), wherein the electrolyte (260) is nitric acid, sulfuric acid, phosphoric acid, acetic acid, ammonium bicarbonate, sodium hydroxide, or potassium nitrate; and
performing a surface treatment, wherein a surface of the carbon fiber (270) is oxidized by active oxygen generated by anodic electrolysis, and thereby oxygen-containing functional groups are introduced to the surface;
**characterized in that** a conductivity value of the electrolyte (260) is from 200 ms/cm to 3,000 ms/cm.

2. The method for manufacturing the carbon fiber of claim 1, wherein the carbon fiber (270) is rayon base fiber, asphalt base fiber, or polyacrylonitrile fiber.

3. The method for manufacturing the carbon fiber of any one of claims 1 or 2, wherein temperature of the electrolyte is controlled at 15-40°C.

4. The method for manufacturing the carbon fiber of any one of claims 1 to 3, wherein the performing the surface treatment comprises controlling voltage at 5-40 V.

5. The method for manufacturing the carbon fiber of any one of claims 1 to 4, wherein an electricity amount supplied in the surface treatment is 3-40 coulombs/gram.

6. The method for manufacturing the carbon fiber of any one of claims 1 to 5, wherein a time for the surface treatment is 5-90 seconds.

7. The method for manufacturing the carbon fiber of any one of claims 1 to 6, wherein the electrolyte (260) is the sulfuric acid, the ammonium bicarbonate, or the phosphoric acid, the conductivity value of the electrolyte is 250-700 ms/cm, and an electricity amount supplied in the surface treatment is 15-25 coulombs/gram.

8. The method for manufacturing carbon fiber of claim 1, further comprising:
providing a carbon fiber, wherein the carbon fibers contain an oil agent, and an amount of the oil agent is 0.5-3.0% by weight of the carbon fiber;
performing a oxidation of the carbon fiber at 200-300°C in air or oxygen;
performing a first carbonization of the carbon fiber at 400-800°C;
performing a second carbonization of the carbon fiber at 900-2,000°C; and wherein a conductivity value of the electrolyte is from 200 ms/cm to 700 ms/cm.

9. The method for manufacturing the carbon fiber of claim 8, wherein the performing the surface treatment comprises controlling voltage at 5-40 V, and an electricity amount supplied in the surface treatment is 3-40 coulombs/gram.

10. The method for manufacturing the carbon fiber of any one of claims 8 or 9, wherein temperature of the electrolyte is controlled at 15-40°C.

11. The method for manufacturing the carbon fiber of any one of claims 8 to 10, wherein the performing the surface treatment comprises controlling voltage at 5-20 V.

## Patentansprüche

1. Verfahren zur Herstellung einer Kohlenstofffaser, welches umfasst:
Platzieren einer Kohlenstofffaser (270) als eine Anode in einem Elektrolyten (260), wobei der Elektrolyt (260) Salpetersäure, Schwefelsäure, Phosphorsäure, Essigsäure, Ammoniumbicarbonat, Natriumhydroxid oder Kaliumnitrat ist; und
Durchführen einer Oberflächenbehandlung, wobei eine Oberfläche der Kohlenstofffaser (270) durch aktiven Sauerstoff oxidiert wird, der durch anodische Elektrolyse erzeugt wird, und dadurch sauerstoffhaltige funktionelle Gruppen in die Oberfläche eingeführt werden;
**dadurch gekennzeichnet, dass** ein Leitfähigkeitswert des Elektrolyten (260) zwischen 200 ms/cm und 3.000 ms/cm liegt.

2. Verfahren zur Herstellung der Kohlenstofffaser nach Anspruch 1, wobei die Kohlenstofffaser (270) eine Faser auf Viskosebasis, eine Faser auf Asphaltbasis oder eine Polyacrylnitrilfaser ist.

3. Verfahren zur Herstellung der Kohlenstofffaser nach einem der Ansprüche 1 oder 2, bei welchem eine Temperatur des Elektrolyten auf 15-40°C geregelt wird.

4. Verfahren zur Herstellung der Kohlenstofffaser nach einem der Ansprüche 1 bis 3, bei welchem das Durchführen der Oberflächenbehandlung eine Steuerung der Spannung bei 5-40 V umfasst.

5. Verfahren zur Herstellung der Kohlenstofffaser nach einem der Ansprüche 1 bis 4, bei welcher eine in der Oberflächenbehandlung zugeführte Strommenge 3-40 Coulomb/Gramm beträgt.

6. Verfahren zur Herstellung der Kohlenstofffaser nach einem der Ansprüche 1 bis 5, bei welcher eine Zeit für die Oberflächenbehandlung 5-90 Sekunden beträgt.

7. Verfahren zur Herstellung der Kohlenstofffaser nach einem der Ansprüche 1 bis 6, wobei der Elektrolyt (260) Schwefelsäure, Ammoniumbicarbonat oder Phosphorsäure ist, der Leitfähigkeitswert des Elektrolyten 250-700 ms/cm ist, und eine in der Oberflächenbehandlung zugeführte Strommenge 15-25 Coulomb/Gramm ist.

8. Verfahren zur Herstellung einer Kohlenstofffaser nach Anspruch 1, welches ferner umfasst:
Bereitstellen einer Kohlenstofffaser, wobei die Kohlenstofffasern ein Ölmittel enthalten, und eine Menge des Ölmittels 0,5-3,0 Gew.-% der Kohlenstofffaser beträgt;
Durchführen einer Oxidation der Kohlenstofffaser bei 200-300°C in Luft oder Sauerstoff;
Durchführen einer ersten Karbonisierung der Kohlenstofffaser bei 400-800°C;
Durchführen einer zweiten Karbonisierung der Kohlenstofffaser bei 900-2.000°C; und wobei ein Leitfähigkeitswert des Elektrolyten zwischen 200 ms/cm und 700 ms/cm liegt.

9. Verfahren zur Herstellung der Kohlenstofffaser nach Anspruch 8, bei welchem das Durchführen der Oberflächenbehandlung eine Steuerung der Spannung bei 5-40 V umfasst, und eine in der Oberflächenbehandlung zugeführte Strommenge 3-40 Coulomb/Gramm beträgt.

10. Verfahren zur Herstellung der Kohlenstofffaser nach einem der Ansprüche 8 oder 9, bei welchem eine Temperatur des Elektrolyten auf 15-40°C geregelt wird.

11. Verfahren zur Herstellung der Kohlenstofffaser nach einem der Ansprüche 8 bis 10, bei welchem das Durchführen der Oberflächenbehandlung eine Steuerung der Spannung bei 5-20 V umfasst.

## Revendications

1. Procédé de fabrication d'une fibre de carbone, comprenant :
le placement d'une fibre de carbone (270) comme anode dans un électrolyte (260), dans lequel l'électrolyte (260) est de l'acide nitrique, de l'acide sulfurique, de l'acide phosphorique, de l'acide acétique, du bicarbonate d'ammonium, de l'hydroxyde de sodium ou du nitrate de potassium ; et
la réalisation d'un traitement de surface, dans lequel une surface de la fibre de carbone (270) est oxydée par de l'oxygène actif généré par électrolyse anodique, et ainsi des groupes fonctionnels contenant de l'oxygène sont introduits à la surface ;
**caractérisé en ce que** une valeur de conductivité de l'électrolyte (260) est comprise entre 200 ms/cm et 3000 ms/cm.

2. Procédé de fabrication de la fibre de carbone selon la revendication 1, dans lequel la fibre de carbone (270) est une fibre à base de rayonne, une fibre à base d'asphalte ou une fibre de polyacrylonitrile.

3. Procédé de fabrication de la fibre de carbone selon l'une quelconque des revendications 1 ou 2, dans lequel la température de l'électrolyte est contrôlée à 15-40°C.

4. Procédé de fabrication de la fibre de carbone selon l'une quelconque des revendications 1 à 3, dans lequel la réalisation du traitement de surface comprend le contrôle de la tension à 5-40 V.

5. Procédé de fabrication de la fibre de carbone selon l'une quelconque des revendications 1 à 4, dans lequel la quantité d'électricité fournie lors du traitement de surface est de 3-40 coulombs/gramme.

6. Procédé de fabrication de la fibre de carbone selon l'une quelconque des revendications 1 à 5, dans lequel un temps de traitement de surface est de 5-90 secondes.

7. Procédé de fabrication de la fibre de carbone selon l'une quelconque des revendications 1 à 6, dans lequel l'électrolyte (260) est l'acide sulfurique, le bicarbonate d'ammonium ou l'acide phosphorique, la valeur de conductivité de l'électrolyte est de 250-700 ms/cm, et la quantité d'électricité fournie lors du traitement de surface est de 15-25 coulombs/gramme.

8. Procédé de fabrication de la fibre de carbone selon la revendication 1, comprenant en outre :
la fourniture d'une fibre de carbone, dans laquelle les fibres de carbone contiennent un agent huileux, et une quantité de l'agent huileux est de 0,5 à 3,0 % en poids de la fibre de carbone ;
la réalisation d'une oxydation de la fibre de carbone à 200-300°C dans l'air ou l'oxygène ;
la réalisation d'une première carbonisation de la fibre de carbone à 400-800°C ;
la réalisation d'une seconde carbonisation de la fibre de carbone à 900-2000°C ;
et dans lequel une valeur de conductivité de l'électrolyte est de 200 ms/cm à 700 ms/cm.

9. Procédé de fabrication de la fibre de carbone selon la revendication 8, dans lequel la réalisation du traitement de surface comprend le contrôle de la tension à 5-40 V, et une quantité d'électricité fournie dans le traitement de surface est de 3-40 coulombs/gramme.

10. Procédé de fabrication de la fibre de carbone selon l'une quelconque des revendications 8 ou 9, dans lequel la température de l'électrolyte est contrôlée à 15-40°C.

11. Procédé de fabrication de la fibre de carbone selon l'une quelconque des revendications 8 à 10, dans lequel la réalisation du traitement de surface comprend le contrôle de la tension sur 5-20 V.
